# EUROPÄISCHE PATENTANMELDUNG

(11) **EP 1 057 571 A1**
(43) Veröffentlichungstag der Anmeldung: **06.12.2000**
(21) Anmeldenummer: 00110383.7
(22) Anmeldetag: 15.05.2000
(51) Int. Cl.: B23K 20/12, B29C 65/06, B29C 65/64

(54) **Verfahren und Vorrichtung zum Reibschweissverbinden**

(30) Priorität: 27.05.1999 DE 19924252
(71) Anmelder: Deutsche Controls GmbH, 80637 München (DE)
(72) Erfinder: Suthoff, Burkhard, Prof. Dr. Dr., 48431 Rheine (DE); Ehs, Eugen, 80637 München (DE)
(74) Vertreter: Grünecker, Kinkeldey, Stockmair & Schwanhäusser Anwaltssozietät

(57) **Zusammenfassung**

Bei einem Verfahren zum Reibschweißverbinden wenigstens zweier Körper aus schmelzbaren Metall- und oder Kunststoff-Werkstoffen, bei dem zu verschweißende, und nicht rotationssymmetrische Verbindungsflächen der Körper durch eine Relativbewegung mit äußerer Reibung bis zur Verschweißbarkeit aktiviert und dann aneinandergepresst werden, wird jede Verbindungsfläche mittels eines flächigen Reibelementes aktiviert, das sich mit Kontaktdruck entlang der Verbindungsfläche bewegt und vor dem Gegeneinanderpresse der aktivierten Verbindungsflächen entfernt wird. In der zum Durchführen des Verfahrens konzipierten Vorrichtung ist wenigstens ein, zum Aktivieren zwischen den Verbindungsflächen (V1, V2) anzuordnendes, mittels des Antriebs (M) entlang der Verbindungsflächen (V1, V2) bewegbares, flächiges Aktivierungs-Reibelement (R, R1, R2) vorgesehen.

## Beschreibung

Die Erfindung betrifft ein Verfahren gemäß dem Oberbegriff des Patentanspruchs 1 und eine Vorrichtung gemäß dem Oberbegriff des Patentanspruchs 7.

Bei einem aus DE 197 46 812 bekannten Verfahren zum Linienschweißen durchdringt ein rotierendes Reibelement zwei oder mehrere flächig aufeinander gepresste Bleche bei einer Bahnbewegung entlang deren Randbereichen. Dabei werden lokale Verbindungsflächen an den Blechen thermisch aktiviert, bis sie bindungsfähig sind. Das Reibelement übt Kontaktdruck aus, bis sich zwischen den Blechen eine linienförmige Pressschweißverbindung einstellt. Das Reibelement zieht bei seiner Bahnbewegung entlang der Randbereiche der schon endgültig positionierten Bleche eine Schweißnaht.

Aus DE 197 31 638 A ist ein Punkt-Schweißverfahren für dünnwandige Werkstücke mittels eines rotierenden Schweißbolzens bekannt. Die Werkstücke werden flächig aufeinandergelegt und gegeneinander gepresst. Der Schweißbolzen dringt bei seiner Rotation von der gegenüberliegenden Seite der Fügezone in ein Werkstück ein, bis die angrenzenden Werkstückbereiche bindungsfähig aktiviert sind und sich unter dem Druck des Schweißbolzens nach Art einer Pressschweißung miteinander verbinden.

Aus DE 197 47 846 A ist es bekannt, ein elektronisches Bauelement aus einem beschichteten Chip und einem gut wärmeleitenden Substrat herzustellen, in dem die beiden aufeinandergelegten Komponenten erwärmt und mit Vibrationsenergie, ähnlich wie bei einem Reibschweißvorgang, beaufschlagt werden.

Aus DE-U-298 13 441 ist ein Reibschweißverfahren bekannt, gemäß dem mit aus langfaserverstärkten Polymer hergestellten Spritzgussformteilen ein Trocknerbehälter für eine Fahrzeugklimaanlage gebildet wird. Die rotationssymmetrischen, kreisringförmigen Verbindungsflächen der zu verbindenden Teile werden relativ zueinander rotiert, bis sie durch Anschmelzen für die Verbindung aktiviert sind, und werden dann kräftig gegeneinander gestaucht. Diese Reibschweißverbindung ist nahezu monolithisch und führt bei dem Trocknerbehälter zu extremer Innen-Druckfestigkeit unter Wechselbelastungen und thermischen Einflüssen.

In der Kunststoff- und Metallfertigungstechnik gibt es erheblichen Bedarf, auch Körper durch Reibschweißen miteinander verbinden zu können, die keine rotationssymmetrischen Verbindungsflächen haben oder selbst nicht rotationssymmetrisch sind. Ferner besteht Bedarf, unterschiedliche Kunststoff- und/oder Metall-Werkstoffe, d.h. Werkstoffe, die sich hinsichtlich ihrer Schweißfähigkeit unterscheiden, miteinander durch Reibschweißen verbinden zu können, und auch Kunststoffkörper mit Metallkörpern zu verbinden, unabhängig, davon, ob sie rotationssymmetrische Verbindungsflachen haben oder nicht.

Der Erfindung liegt die Aufgabe zugrunde, ein Verfahren der eingangs genannten Art sowie eine Vorrichtung zum Durchführen des Verfahrens anzugeben, mit denen Kunststoff- und/oder Metallkörper ohne rotationssymmetrische Verbindungsflächen oder rotationssymmetrische Gestalt auf einfache Weise reibschweißbar sind, und zwar weitestgehend unabhängig von der Geometrie der Verbindungsflächen bzw. der Form der Körner, und um eine qualitativ hochwertige und belastbare Verbindung zu erreichen.

Die gestellte Aufgabe wird erfindungsgemaß mit dem Verfahren gemäß Patentanspruch 1 und mit der Vorrichtung gemäß Patentanspruch 7 gelöst.

Mittels des Reibelementes wird verfahrensgemäß jede Verbindungsfläche ohne direkten Kontakt mit der jeweils anderen für sich aktiviert, ehe die Verschweißung erfolgt. Vor dem Verschweißen wird das Reibelement entfernt, so dass es an der Verschweißung nicht teilnimmt. Dadurch ist das Verfahren unabhängig von der geometrischen Gestalt der Verbindungsflächen oder der Gestalt der Körner. Es lässt sich jede Verbindungsfläche exakt auf den Punkt aktivieren, so dass sich eine hohe Qualität der Reibschweißverbindung erreichen lässt, die unabhängig von der Geometrie und winkelgetreu ist. Dabei können die Verbindungsflächen fast linien- oder punktförmig, teilflächig oder vollflächig sein. Durch die Relativbewegung zwischen der Verbindungsfläche und dem Reibelement wird jeder Punkt der Verbindungsfläche gleich aktiviert, was zu einer homogenen Reibschweißverbindung führt. Die zum Aktivieren erzeugte Reibungswärme wird durch die Reibungsverhältnisse zwischen jeder Verbindungsfläche und dem Reibelement, der Relativgeschwindigkeit, dem Kontaktdruck und die Einwirkzeit exakt steuerbar, wobei diese Parameter in einem großen Bereich wählbar sind. Gegebenenfalls kann das Reibelement zusätzlich erwärmt werden, um den Zeitaufwand für die Aktivierung zu verkürzen. Dabei wird das Reibelement kontinuierlich oder oszillierend, d.h., hin- und hergehend angetrieben. Auch eiernde Bewegungen des Reibelements ähnlich der Bewegung in einem Orbital-Schwingschleifer können für eine wirkungsvolle und gleichförmige Aktivierung der Verbindungsflächen zweckmäßig sein. Unter einer kontinuierlichen Bewegung wird eine Bewegung des Reibelements in einer Richtung verstanden, die entweder mit konstanter Geschwindigkeit oder mit einem bestimmten Geschwindigkeitsprofil mit Beschleunigungs- und Verzögerungsphasen erfolgt.

Vorrichtungsgemäß werden die zu verbindenden Körper relativ zueinander exakt positioniert und an das Band angedrückt. Dabei handelt es sich um ein aus hartem elastischem Material bestehendes Band, das zwischen den Verbindungsflächen hindurchgezogen wird. Das Band wird relativ zu den Verbindungsflächen bewegt, bis jeder Punkt der Verbindungsflächen ausreichend aktiviert ist. Das wenigstens eine Band hat der Verbindungsflache zugewandt eine zweckmäßigerweise reibungsaktiv strukturierte Aktivierungsoberfläche. Dann wird das Band entfernt und werden die Verbindungsflächen gegeneinander gepresst. Es wird auf diese Weise eine sehr homogene und winkelgetreue Reibschweißverbindung möglich. Der apparative Aufwand ist gering. Die Vorrichtung ist universell für unterschiedliche Werkstoffe und/oder unterschiedliche geometrische Formen der Körper verwendbar.

Sind Körper aus amorphem Kunststoff miteinander zu verbinden, oder ein Körper aus amorphem Kunststoff mit einem anderen Kunststoff- oder Metallkörper, kann es zweckmäßig sein, die Aktivierung der jeweiligen Verbindungsfläche durch von außen zugeführte Wärmeenergie zumindest temporär zu unterstützen. Bei Körpern aus unterschiedlich weichen Werkstoffen kann die Aktivierung der Verbindungsfläche aus härterem Werkstoff durch von außen zugeführte Wärmeenergie unterstützt werden.

Verfahrenstechnisch einfach wird für beide gegenseitigen Verbindungsflächen ein gemeinsames Reibelement verwendet. Bestehen die Körper aus gleichem Werkstoff oder aus unterschiedlichen Werkstoffen mit ähnlichen Schweißeigenschaften, dann können die Aktivierungsoberflächen des Reibelementes im wesentlichen gleich sein. Sind hingegen unterschiedliche Werkstoffe oder Körper aus hinsichtlich der Schweißeigenschaft unterschiedlichen Werkstoffen miteinander zu verbinden, dann können die Aktivierungsoberflächen des Reibelementes unterschiedliche Reibeigenschaften besitzen, z.B. derart, dass bei derselben Relativbewegung des Reibelements an beiden Verbindungsflächen in der Verbindungsfläche aus dem schweißunfreundlicheren Werkstoff eine höhere Reibleistung erbracht wird. Die Aktivierungsoberflächen können sich hierbei nicht nur durch ihre Reibeigenschaften unterscheiden, sondern auch durch ihre die Reibeigenschaften mitbestimmenden Strukturierungen, entsprechend den jeweiligen Werkstoffcharakteristika.

Alternativ lassen sich für die beiden gegenseitigen Verbindungsflächen getrennte Reibelemente einsetzen, deren jedes auf den Werkstoff bzw. das Schweißverhalten der von ihm beaufschlagten Verbindungsfläche abgestimmt sein kann. Die beiden Reibelemente können gleiche oder unterschiedliche Reibeigenschaften an ihren Aktivierungsoberflächen besitzen oder mit gleichen oder unterschiedlichen Relativgeschwindigkeiten oder mit gleichen oder unterschiedlichen Kontaktdrücken angetrieben werden. Auf diese Weise lassen sich die letztendlich für die jeweilige Aktivierwirkung entscheidenden Parameter in einem weiten Bereich so aufeinander abstimmen, dass beide Verbindungsflächen dann exakt auf den Punkt aktiviert sind, wenn die Reibelemente entfernt sind und die Körper gegeneinander gepresst werden.

Zweckmäßig werden nicht nur zwei Körper, sondern gleichzeitig mehrere Körper-Paare von dem gleichen Reibelement oder den beiden gleichen Reibelementen beaufschlagt. Es lässt sich ein gesteigerter Ausstoß an verschweißten Körpern mit verringertem verfahrenstechnischem und apparativem Aufwand erzielen.

Alternativ lassen sich ferner sandwichartig reibgeschweißte Produkte aus mehr als zwei Körpern in einem Verfahrenszyklus bilden. Diese mehrteilige Sandwichverbindung kann gleichzeitig bei mehreren solchen Gruppen durchgeführt werden, um einen höheren Ausstoß zu erzielen.

Es ist entweder für jede Verbindungsflache ein eigenes Band oder für die beiden gegenseitigen Verbindungsflächen ein gemeinsames Band vorgesehen. Dies ermöglicht die gezielte Aktivierung jeder Verbindungsfläche unter Anpassung an das Schweißverhalten des jeweiligen Werkstoffes. Dadurch lassen sich Körper unterschiedlicher Größen oder Reibeigenschaften oder aus verschiedenen Werkstoffen fügen.

Das Band ist entweder endlos oder endlich. Vorzugsweise handelt es sich um ein Stahlblechband mit wenigstens einer strukturierten oder beschichteten Aktivierungsoberfläche oder um ein Schleifband.

Dabei können die beiden Aktivierungsoberflächen des Bandes oder der beiden Bänder gleich oder unterschiedlich reibungsaktiv strukturiert sein, so dass bei einem Aktivierungszyklus die gegenseitigen Verbindungsflächen exakt zum gleichen Zeitpunkt aktiviert sind, wenn sie gegeneinander gepresst werden.

Alternativ sind die beiden Bänder so antreibbar, dass sie gleiche oder unterschiedliche Relativgeschwindigkeiten gegenüber ihren Verbindungsflächen haben. Weiterhin kann auch der jeweilige Kontaktdruck gleich oder unterschiedlich eingestellt werden, beispielsweise mittels der Pressvorrichtung der Reibschweißvorrichtung. Auf diese Weise lassen sich die Parameter, die gemeinsam für das Aktivieren maßgeblich sind, vorbestimmen bzw. genau einstellen.

Für den Fall, dass werkstoffbedingt oder in Abhängigkeit von der Geometrie der Verbindungsfläche bzw. des Körpers die Reibbeaufschlagung allein nicht ausreichen sollte, die Aktivierung exakt getimed vorzunehmen, kann gemäß Anspruch 16 eine Wärmequelle eingesetzt werden, mit der zusätzliche Wärmeenergie in wenigstens eine Verbindungsfläche einbringbar ist.

Die oszillierende Bewegung des Bandes lässt sich in ihrer Frequenz und Amplitude im Hinblick auf eine optimale Aktivierung jeder Verbindungsfläche einstellen.

Baulich einfach wird das endliche Band mit dem Bandspulantrieb über eine bestimmte Strecke und mit einem bestimmten Geschwindigkeitsprofil zwischen den Verbindungsflächen durchgezogen. Erst wenn das Bandende ausgetreten ist, werden die Verbindungsflächen gegeneinander gepresst.

Es können zwei aufeinanderliegende, gegebenenfalls miteinander verbundene Bänder vorgesehen. Jedes Band ist zweckmäßigerweise hinsichtlich seines Materials und/oder seiner Aktivierungsoberfläche auf den Werkstoff der mit ihm in Kontakt tretenden Verbindungsfläche abgestimmt, derart, dass beide Verbindungsflächen zum selben Zeitpunkt schweißfähig aktiviert sind und gegeneinander gepresst werden können.

Alternativ lassen sich die beiden aufeinanderliegenden Bänder durch eigenständige Antriebe und gegebenenfalls individuell antreiben. Da sie durch den Kontaktdruck gegeneinander gepresst werden, sollte sie im gegenseitigen Berührungsbereich gleitfreudig beschichtet und/oder geschmiert sein.

Bei allen vorgenannten Ausführungsformen ist eine Vorgangsweise denkbar, bei der alternativ die zu verschweißenden Körner vom Band wegbewegt und neben diesem gegeneinander gedrückt werden.

Anhand der Zeichnung werden Ausführungsformen des Erfindungsgegenstandes erläutert. Es zeigen:
- Fig. 1: eine schematische Perspektivansicht zur Verdeutlichung eines Reibschweißverfahrens,
- Fig. 2 - 6: unterschiedliche Verfahrensvarianten, jeweils in schematischer Darstellung, und
- Fig. 7: eine schematische Seitenansicht einer Vorrichtung zum Reibschweißen.

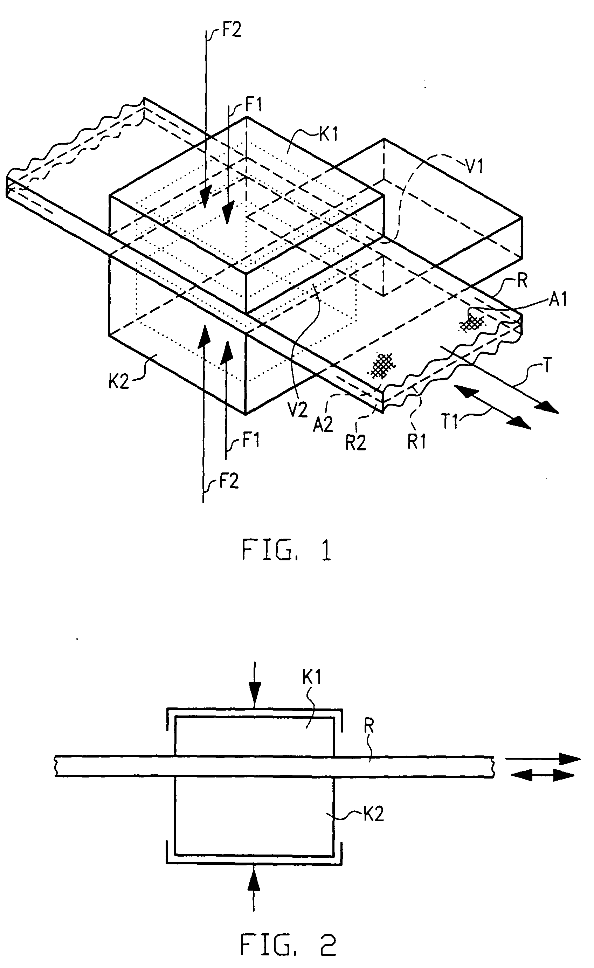

In Fig. 1 soll ein Körper K1 mit einem anderen Körper K2 in gegenseitigen, im wesentlichen ebenen Verbindungsflächen V1, V2 durch Reibschweißen verbunden werden. Zumindest die gegenseitigen Verbindungsflächen V1, V2 sind nicht rotationssymmetrisch. Auch die Körper K1, K2 haben unterschiedliche Formen und Dimensionen. Beide Körper K1, K2 können aus Kunststoff oder Metall bestehen oder aus unterschiedlichen, jedoch schweißfähigen Werkstoffen, wie Kunststoff oder Metall. Die Schweißeigenschaften in den Verbindungsflächen V1, V2 können in etwa gleich, aber auch deutlich voneinander verschieden sein.

Die beiden Körper K1, K2 sind relativ zueinander positioniert, ohne dass sich ihre Verbindungsflächen V1, V2 berühren. Vielmehr liegt zwischen den Verbindungsflächen V1, V2 ein Reibelement R, gegen welche die Verbindungsflächen V1, V2 mit einem bestimmten Kontaktdruck F1 angedrückt sind. Das Reibelement R wird relativ zu den positionierten Körpern K1, K2 in Richtung eines Pfeils T beispielsweise mit im wesentlichen kontinuierlicher Geschwindigkeit und linear angetrieben, wobei eine obere Aktivierungsoberfläche A1 des Reibelements R die Verbindungsfläche V1 und eine untere Aktivierungsoberfläche A2 des Reibelements R die andere Verbindungsfläche V2 reibungsbeaufschlagt. An den Aktivierungsoberflächen A1, A2 können spezielle Oberflächenstrukturierungen vorgesehen sein, z.B. eine bestimmte, im wesentlichen gleichmäßige Rauhigkeit, ein Belag ähnlich einem Schmirgelbelag, oder eine gezahnte, geriffelte oder durch Plasmasprühen oder Sandstrahlen und dgl. behandelte Oberflächenstruktur.

Alternativ kann das Reibelement R oszillierend hin- und herbewegt werden gemäß dem Doppelpfeil T1, und zwar entweder mit konstanter Amplitude und Frequenz oder mit variabler Frequenz und/oder Bewegungsamplitude. Bei der Relativbewegung kann der Kontaktdruck F1 konstant gehalten oder reduziert bzw. erhöht bzw. schweilend verändert werden.

Durch die Reibungsbeaufschlagung werden die Verbindungsflächen V1, V2 bis zur Schweißfähigkeit aktiviert, d.h. im Berührungsbereich plastifiziert bzw. angeschmolzen. Sind die beiden Verbindungsflächen V1, V2 bis zur Schweißfähigkeit aktiviert, was beispielsweise durch die Steuerung der Einwirkzeit der Reibungsbeaufschlagung und der anderen, vorerwähnten Parameter veranlasst wird, dann wird das Reibelement R entfernt und werden die beiden Körner, K1, K2 mit ihren Verbindungsflächen V1, V2 gegeneinander gepresst, und zwar mit einer Anpresskraft F2. Danach ist eine innerhalb der Verbindungsflächen V1, V2 vollflächige, eine punktuelle oder eine linienförmige Reibschweißverbindung hergestellt.

Gestrichelt ist in Fig. 1 angedeutet, dass anstelle eines einzigen Reibelementes R zwei aufeinanderliegende Reibelemente R1, R2 vorgesehen sein können, die entweder mit gleichen Bewegungen T, T1 oder mit unterschiedlichen Bewegungen T, T1 angetrieben werden und gleichartige oder verschiedene Aktivierungsoberflächen A1, A2 besitzen.

Die Verbindungsflächen V1, V2 sind in Fig. 1 annähernd rahmenartig ausgebildet. Sie könnten jedoch vollflächig sein oder annähernd linienförmig oder sogar nur annähernd punktförmig.

Fig. 2 verdeutlicht das Verfahren zum Verbinden zweier Körner K1, K2 mittels eines einzigen gemeinsamen Reibelements R, das entweder kontinuierlich in einer Richtung oder hin- und hergehend oszillierend angetrieben wird. Es ist möglich, das Reibelement eiernd anzutreiben. Die beiden Körner werden gegeneinander gepresst, sobald das Reibelement nach Aktivieren der Verbindungsflächen entfernt wird, oder nach dem die beiden Körper nach dem Aktivieren vom Reibelement R wegbewegt worden sind.

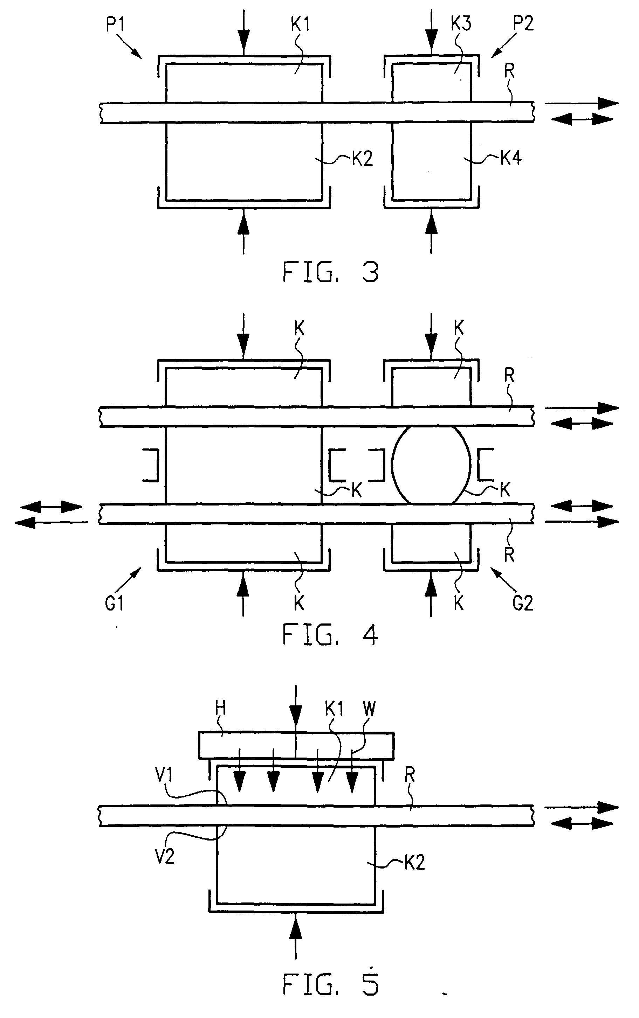

In Fig. 3 werden zwei Paare P1, P2 von Körpern K1 bis K4 gemeinsam und gleichzeitig bearbeitet, und zwar mittels eines gemeinsamen Reibelementes R. In Fig. 2 oder Fig. 3 könnten anstelle eines einzigen Reibelementes auch die beiden in Fig. 1 gestrichelt angedeuteten Reibelemente R1, R2 verwendet werden.

In Fig. 4 wird wenigstens eine Gruppe G1 aus mehr als zwei Körpern K gleichzeitig reibverschweißt, und zwar mittels in diesem Fall zweier Reibelemente R, die zwischen den sich jeweils gegenüberliegenden Verbindungsflächen bewegt werden. Es lässt sich auf diese Weise ein sandwichartiges Endprodukt aus mehreren Körpern herstellen. Jedes Reibelement könnte kontinuierlich oder oszillierend angetrieben werden. Denkbar wäre es, nur ein einziges Reibelement R zu verwenden, das zwischen den beiden Arbeitsebenen umgelenkt wird. Ferner ist in Fig. 4 angedeutet, dass gleichzeitig auch eine zweite Gruppe G2 aus wiederum mehr als zwei Körpern reibverschweißt wird.

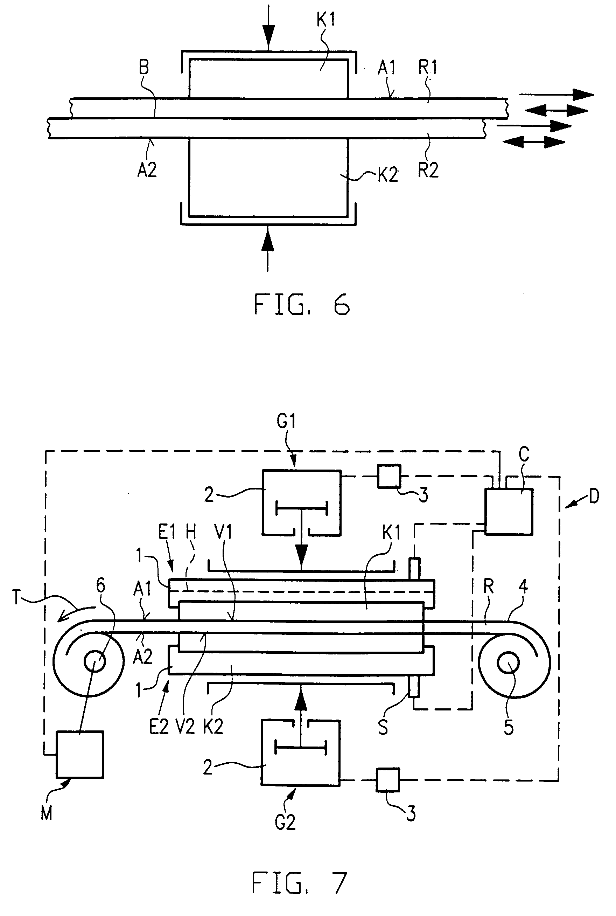

In Fig. 5 ist angedeutet, dass zusätzlich eine Heizeinrichtung H vorgesehen ist, mit der von außen Wärme W zur Einwirkung in zumindest einer Verbindungsfläche bringbar ist. Dies kann zweckmäßig sein bei einem Körper K1 aus amorphem Kunststoff, und dem einen anderen Körper aus einem anderen Kunststoff oder aus Metall. Ferner kann diese Verfahrensvariante zweckmäßig sein, um unterschiedlich weiche Werkstoffe der Körper K1, K2 verbinden zu können, und den härteren Werkstoff durch die zusätzliche Wärme W in der gleichen Behandlungszeit auf die gleiche Weichheit zu aktivieren wie den anderen Werkstoff.

In Fig. 6 ist angedeutet, dass die Körper K1, K2 mittels zweier Reibelemente R1, R2 (analog zur in Fig. 1 gestrichelten Darstellung) behandelt werden, wobei jedes Reibelement R1, R2 entweder kontinuierlich oder oszillierend antreibbar ist. An jedem Reibelement R1, R2 ist nur eine Aktivierungsoberfläche A1, A2 vorgesehen, wobei diese gleich oder verschieden sein können. Im gegenseitigen Berührungsbereich B der beiden Reibelemente R1, R2 sollten zweckmäßigerweise gleitfreudige Oberflächen bzw. sogar eine Schmierung vorgesehen sein.

Fig. 7 verdeutlicht eine konkrete Ausführungsform einer Vorrichtung D zum Reibschweißen, beispielsweise zweier platten- oder folienförmiger Körper K1, K2. Die Vorrichtung D weist einen nicht gezeigten Maschinenrahmen auf, in welchem plattenförmige Positionierteile E1 und E2 relativ zueinander verstellbar angeordnet sind. Der Positionierteil E1 wird über eine Pressvorrichtung G1 beaufschlagt, beispielsweise einen Hydraulikzylinder 2, der über eine Ventileinrichtung 3 hinsichtlich des Drucks und Hubs steuerbar ist. Der Positionierteil E2 ist in ähnlicher Weise durch eine Anpressvorrichtung G2 beaufschlagbar, nämlich einem Hydraulikzylinder 2 und eine Steuereinrichtung 3. Einer der beiden Positionierteile E1, E2 könnte stationär in der Vorrichtung D gelagert sein. Der Positionierteil E1, E2 positioniert einen Körner K1 bzw. K2 derart, dass die beiden Verbindungsflächen V1, V2 zueinander weisen, einander jedoch nicht berühren. Zwischen den Verbindungsflächen V1, V2 ist ein in diesem Fall als hartes, elastisches oder flexibles Band 4 ausgebildetes Reibelement R vorgesehen. Zum Bewegen des Reibelementes R in Richtung des Pfeiles T ist ein Antrieb M vorgesehen, der z.B. mit einem Wickelantrieb 5, 6 des Bandes 4 zusammenwirkt. Das Band 4 ist endlich und auf die beiden Wickelkerne des Wickelantriebs 5, 6 aufgewickelt. Das Reibelement R besitzt die Aktivierungsoberflächen A1, A1, die unter dem durch die Zylinder 2 erzeugten Kontaktdruck an den Verbindungsflächen V1, V2 anliegen. Die Verbindungsflächen V1, V2 können flach oder gekrümmt verlaufen, weil sich das Band 4 auch an Krümmungen anzupassen vermag. In der Vorrichtung D können Sensoren S vorgesehen sein, die Temperaturen, Drücke, Hübe oder dgl. abgreifen und an eine Steuervorrichtung C übermitteln. An die Steuervorrichtung C sind auch die Steuerventile 3 und der Antrieb M angeschlossen.

Ehe das Reibschweißverfahren eingeleitet wird, werden die Komponenten gemäß Fig. 7 angeordnet. Die Verbindungsflächen V1, V2 werden mit dem Kontaktdruck F1 gegen die Aktivieroberflächen A1, A2 gepresst. Die Breite des Bandes 4 kann erheblich größer sein als die Breitendimension der Verbindungsflächen V1, V2. Auch kann das Band 4 länger sein, als es zum vollständigen Aktivieren der Verbindungsflächen V1, V2 erforderlich ist. In diesem Fall wird nur eine so große Bandlänge zum Aktivieren benutzt, wie nötig.

Dann wird der Antrieb M eingeschaltet und wird das Reibelement R zwischen den Verbindungsflächen V1, V2 hindurch- bzw. diesen entlanggezogen, bis z.B. das freie Ende des Bandes 4 austritt. In diesem Moment werden die Zylinder 2 angesteuert und die beiden Körner K1, K2 fest gegeneinander gepresst. Dann ist die Reibschweißverbindung fertig.

Das Verfahren ist besonders zweckmäßig für Körper aus Kunststoffen, und zwar amorphen Kunststoffen bzw. Thermoplasten. Aber auch Metalle können als Werkstoffe verschweißt werden bzw. Werkstoffpaarungen aus Kunststoff und Metall. Falls das Verfahren mit zusätzlich von außen eingebrachter Wärmeenergie ablaufen soll, könnte die Heizeinrichtung H in einem der Positionierteile E1 oder E2 oder in beide eingebaut werden. Die Körper können massiv oder mit Hohlräumen ausgebildet sein. Es lassen sich unterschiedliche Werkstoffe bzw. Werkstoffe mit unterschiedlichen Schweißeigenschaften reibschweißen, vor allem dadurch, dass die Parameter, die beim Aktivieren der jeweiligen Verbindungsfläche eine Rolle spielen, innerhalb einer großen Bandbreite individuell variierbar sind.

In der vorstehenden Beschreibung wurde das Reibschweißen von Körpern mit nicht rotationssymmetrischer Form oder nicht rotationssymmetrischen Verbindungsflächen nur beispielsweise erläutert. Es liegt auf der Hand, dass selbstverständlich auch Körper mit rotationssymmetrischer Gestalt bzw. rotationssymmetrischen Verbindungsflächen genauso reibgeschweißt werden können, ohne dafür Drehvorrichtungen verwenden zu müssen. Auch bei solchen Körpern ist es von Vorteil, dass bei einer im wesentlichen geradlinigen Bewegung des Reibelementes alle Punkte der Verbindungsflächen gleich beaufschlagt werden, was bei einer Rotation nicht möglich ist, weil die Relativgeschwindigkeiten mit zunehmendem Abstand vom Drehzentrum zunehmen.

## Patentansprüche

1. Verfahren zum Reibschweißverbinden wenigstens zweier Körper aus schmelzbaren Werkstoffen, bei dem zu verschweißende gegenseitige Verbindungsflächen der Körper durch eine Relativbewegung einer mit Kontaktdruck angepressten Aktivierungsoberfläche wenigstens eines Reibelementes mit äußerer Reibung bis zur Verschweißbarkeit aktiviert und aneinandergepresst werden, **dadurch gekennzeichnet**, dass jede Verbindungsfläche mittels des kontinuierlich oder oszillierend entlang dieser Verbindungsfläche bewegten Reibelementes für sich aktiviert wird, dass das Reibelement nach dem Aktivieren entfernt wird, und dass die aktivierten Verbindungsflächen erst dann gegeneinander gepresst werden.

2. Verfahren nach Anspruch 1, **dadurch gekennzeichnet**, dass die Verbindungsflächen wenigstens eines Körpers aus amorphem Kunststoff-Werkstoff oder bei zwei Körpern aus unterschiedlich gleichen Werkstoffen die Verbindungsfläche des Körpers aus dem härteren Werkstoff zusätzlich durch von außen zugeführte Wärmeenergie aktiviert wird.

3. Verfahren nach Anspruch 1, **dadurch gekennzeichnet**, dass entlang zweier gegenseitiger Verbindungsflächen ein gemeinsames Reibelement bewegt wird, dessen Aktivierungsoberflächen gleiche oder unterschiedliche Reibeigenschaften aufweisen.

4. Verfahren nach Anspruch 1, **dadurch gekennzeichnet**, dass entlang zweier gegenseitiger Verbindungsflächen zwei getrennte Reibelemente mit Aktivierungsoberflächen gleicher oder unterschiedlicher Reibeigenschaften mit gleichen oder unterschiedlichen Relativgeschwindigkeiten und gleichen oder unterschiedlichen Kontaktdrücken bewegt werden.

5. Verfahren nach wenigstens einem der Ansprüche 1 bis 4, **dadurch gekennzeichnet**, dass mittels der beiden Aktivierungsoberflächen eines oder zweier Reibelemente die gegenseitigen Verbindungsflächen von mehreren, Paare bildenden Körpern gleichzeitig aktiviert werden.

6. Verfahren nach wenigstens einem der Ansprüche 1 bis 5, **dadurch gekennzeichnet**, dass die gegenseitigen Verbindungsflächen von mehr als zwei sandwichartig angeordneten Körpern durch dazwischen angeordnete Reibeelemente gleichzeitig aktiviert werden.

7. Vorrichtung zum Reibschweißverbinden wenigstens zweier Körner (K, K1 bis K4) aus schmelzbaren Werkstoffen in gegenseitigen Verbindungsflächen (V1, V2) mit einer Positioniervorrichtung (E1, E2) für die Körper, wenigstens einem zumindest eine Aktivierungsoberfläche (A1, A2) aufweisenden Reibelement (R, R1, R2), wenigstens einem Antrieb (m) zum Erzeugen einer relativen reibungs- und kontaktdruckbehafteten Bewegung zwischen jeder Verbindungsfläche und dem Reibelement, und einer Pressvorrichtung (G1, G2) zum Gegeneinanderpressen der Körper, **dadurch gekennzeichnet**, dass das Reibelement (R, R1, R2) ein zum Aktivieren zwischen den Verbindungsflächen (V1, V2) anzuordnendes, mittels des Antriebs (M) entlang der Verbindungsflächen kontinuierlich oder oszillierend bewegbares, flächiges Band (4) aus hartem, elastischem Material ist.

8. Vorrichtung nach Anspruch 7, **dadurch gekennzeichnet**, dass zwischen gegenseitigen Verbindungsflächen ein gemeinsames Band (4) oder für jede der gegenseitigen Verbindungsflächen (V1, V2) ein eigenes Band vorgesehen ist.

9. Vorrichtung nach Anspruch 7, **dadurch gekennzeichnet**, dass das Band (4) endlos oder endlich ist, und vorzugsweise ein Stahlblechband mit strukturierter oder beschichteter Aktivierungsoberflächen (A1, A2) oder ein Schleifband ist.

10. Vorrichtung nach wenigstens einem der Ansprüche 7 bis 9, **dadurch gekennzeichnet**, dass die Aktivierungsoberflächen (A1, A2) des Bandes (4) oder der Bänder gleichartig oder unterschiedlich reibungsaktiv strukturiert sind.

11. Vorrichtung nach Anspruch 8, **dadurch gekennzeichnet**, dass die beiden Bänder mit gleichen oder unterschiedlichen Relativgeschwindigkeiten antreibbar sind, und dass mittels der Pressvorrichtung (G1, G2) zwischen den gegenseitigen Verbindungsflächen (V1, V2) und den Bändern gleiche oder unterschiedliche Kontaktdrücke (F1) einstellbar sind.

12. Vorrichtung nach Anspruch 7, **dadurch gekennzeichnet**, dass die Vorrichtung (D) wenigstens eine Wärmequelle (H) zur thermischen Unterstützung der Aktivierung wenigstens einer der Verbindungsflächen (V1, V2) aufweist.

13. Vorrichtung nach Anspruch 7, **dadurch gekennzeichnet**, dass die Geschwindigkeit und/oder Frequenz der kontinuierlichen oder oszillierenden Relativbewegung (T1, T2) des Bandes (4) einstellbar, vorzugsweise veränderbar ist.

14. Vorrichtung nach Anspruch 9, **dadurch gekennzeichnet**, dass der Antrieb (M) als Band-Abspul-Antrieb für das endliche Band (4) ausgebildet ist.

15. Vorrichtung nach Anspruch 8, **dadurch gekennzeichnet**, dass zwei aufeinanderliegende, gegebenenfalls sandwichartig miteinander verbundene, Bänder vorgesehen sind.

16. Vorrichtung nach Anspruch 8, **dadurch gekennzeichnet**, dass jedes der beiden Bänder mittels des eigenen Antriebs (M) verschieden vom anderen antreibbar ist, und dass die zueinander weisenden und aufeinanderliegenden Bandoberflächen (B) gleitfreudig beschichtet und/oder geschmiert sind.
